# EUROPÄISCHE PATENTSCHRIFT

(11) **EP 2 229 421 B1**
(45) Veröffentlichungstag und Bekanntmachung des Hinweises auf die Patenterteilung: **20.07.2011**
(21) Anmeldenummer: 09700799.1
(22) Anmeldetag: 08.01.2009
(51) Int. Cl.: C09J 4/00

(54) **TEXTILES HALBZEUG MIT WENGISTENS EINER MIT EINEM KLEBER VERSEHENEN OBERFLÄCHE**
TEXTILE SEMIFINISHED PRODUCT WITH AT LEAST ONE SURFACE PROVIDED WITH AN ADHESIVE
PRODUIT TEXTILE SEMI-FINI COMPRENANT AU MOINS UNE SURFACE MUNIE D'UN ADHÉSIF

(30) Priorität: 11.01.2008 DE 102008004112
(43) Veröffentlichungstag der Anmeldung: 22.09.2010
(73) Patentinhaber: SAERTEX GmbH & Co. KG, 48369 Saerbeck (DE)
(72) Erfinder: PALINSKY, Andreas, 47445 Moers (DE); ISCHTSCHUK, Lars, 49205 Hasbergen (DE); ROTH, Ekkehard, 21423 Winsen (DE)
(74) Vertreter: Werner & ten Brink
(86) Internationale Anmeldenummer: PCT/EP2009/050173
(87) Internationale Veröffentlichungsnummer: WO 2009/087192

(56) Entgegenhaltungen:
- WO-A-00/10964
- WO-A-00/37561
- WO-A-2006/059056
- DE-A1- 10 003 972
- US-A1- 2005 095 933
- US-A1- 2006 048 943
- DATABASE WPI Week 200449 Thomson Scientific, London, GB; AN 2004-501508 XP002524279 & JP 2004 100059 A (ASAHI FIBREGLASS KK) 2. April 2004 (2004-04-02)
- DATABASE WPI Week 198749 Thomson Scientific, London, GB; AN 1987-345586 XP002524280 & JP 62 250026 A (TORAY SILICONE CO LTD) 30. Oktober 1987 (1987-10-30)
- DATABASE WPI Week 199604 Thomson Scientific, London, GB; AN 1996-035949 XP002524281 & JP 07 304879 A (TEIJIN LTD) 21. November 1995 (1995-11-21)

## Beschreibung

Die vorliegende Erfindung betrifft ein textiles Halbzeug mit wenigstens einer mit einem Kleber versehenen Oberfläche nach dem Oberbegriff des Anspruchs 1.

Es ist bekannt, Textilien, die als Verstärkungsmaterialien zur Herstellung faserverstärkter Bauteile - sogenannter Composites - verwendet werden, selbstklebend auszuführen. Insbesondere in der Automobilindustrie, dem Bootsbau oder im Bereich Rotoren für Windkraftanlagen, wo relativ große und komplexe Preforms aus trockenen Verstärkungsmaterialien herzustellen sind, besteht Interesse an einer Fixierung der textilen Einzellagen. Hierzu wird üblicherweise auf die Oberfläche der Textilien ein sogenannter Textilbinder, beispielsweise Heißschmelzkleber auf Basis von Epoxidharzen oder Polyamiden oder ähnliche schmelzbare Festharze, aufgebracht. Die selbstklebenden Textilien können dann in einer Form platziert und durch den Kleber an der Form oder einer bereits darauf fixierten Lage gehalten werden.

Darüber hinaus besteht bei der Herstellung von Sandwichbauteilen häufig die Anforderung, die Haftung textiler Lagen zum verwendeten Kernmaterial sicherzustellen. Üblicherweise handelt es sich dabei um Balsaholz oder Schäume aus Polyvinylchlorid (PVC), Polyethylen (PE), Polypropylen (PP), Polyurethan (PUR), Polyethylentherephthalat (PET), Polymethacrylimid (Rohacell®).

Nachteilig bei den bisher verwendeten Heißschmelzklebern ist, dass diese entweder bei Umgebungstemperatur nicht klebrig sind und daher zur Aktivierung erwärmt werden müssen oder dass bei Klebstoffen, die bei Raumtemperatur über eine ausreichende Klebrigkeit verfügen, die Klebrigkeit der Textilien schon nach kurzer Zeit abnimmt, so dass das Textil nicht über einen längeren Zeitraum ohne Einbußen der Klebrigkeit gelagert werden kann. Dies beruht auf der Affinität derartiger Schmelzkleber zur Beschichtung (Schlichte) der verwendeten Fasern, insbesondere wenn diese auf Epoxidharzbasis formuliert sind, sowie auf der Kapillarwirkung der Filamente. Diese Effekte bewirken, dass der auf die Oberfläche der Verstärkungsmaterialien aufgebrachte Klebstoff nach kurzer Zeit in das Innere des Textils migriert. Andere Textilbinder, die in Pulverform appliziert werden, besitzen bei Raumtemperatur keine Klebrigkeit, sondern müssen durch Temperatureinwirkung angeschmolzen werden, um die Lagenfixierung zu erzielen.

Weiterhin ist bekannt, styrollöslichen Kautschuk oder Kautschukemulsionen auf die Textilien aufzubringen, um ihrer Oberfläche eine Klebrigkeit zu verleihen.

Da der Kautschuk jedoch nur schwer löslich in den für die Compositeherstellung verwendeten Matrixharzen ist, verbleibt der Kautschuk als Fremdkörper im faserverstärkten Bauteil.

Die Folgen sind eine schlechte Oberflächenqualität der Faserverbundbauteile sowie nicht tolerierbare Herabsetzung der mechanischen Festigkeitswerte der Bauteile um mehr als 25%.

Aus der WO 2006/059056 A sind Trägerfluide für die Erschließung fossiler Brennstoffe bekannt, bei denen Zweikomponentenharze auf Epoxidbasis eingesetzt werden können.

Die US 2005/0959933 A1 offenbart textile Artikel wie Teppiche, die mit schmutzabweisenden Materialien versehen sind.

Die JP 2004-100059 A offenbart Fasern, die mit einem Imprägnierungmaterial A) und einem Überzugsmaterial B) versetzt sind, wobei A) und B) jeweils ein Epoxidharz darstellen können und dass eine Überzugsmaterial B) ein nichtgehärtetes Epoxidharz darstellen kann.

Die WO 00/37561 A offenart Schleifmitteln und beschreibt als Trägermaterial eine Liste von Materialien, unter denen sich auch Stoff, also eine Textilie befinden. Als Binder wird unter anderem ein Epoxidharz vorgeschlagen. Epoxidharze werden weiterhin als eines von vielen Mitteln zur Oberflächenbehandlung der Stoffe beschriebe. Weiterhin werden verschiedenartige Wege beschreiben, um den Stoff mit Binder zu versehen, darunter auch eine Teilvernetzung des Binders auf dem Stoff.

Die WO 00/10964 A beschreibt in Verbindung mit photoaktivierbaren stickstoffhaltigen Basen als eine mögliche Komponente eine umfassende Aufzählung von Epoxidharzen.

Die JP S62-250026 A beschreibt die Herstellung von Epoxidharzen mit Silylpolyphosphatestern als Härter für medizinische oder Nahrungsmittelanwendungen.

Die US 2006/048943 A1 offenbart Stützmittel für die Erschliessung unterirdischer Öl- oder Wasservorkommen und beschreibt die räumliche Ausdehnung dieser Stützmittel, die unter anderem aus Epoxidharzen hergestellt werden können.

Die DE 100 03 972 A1 offenbart einen Transmissionsriemen, der eine Kautschukschicht, in die Schnüre eingebettet sind, und eine Schicht, die eine mit organischem Peroxid vernetzte Kautschukzusammensetzung aufweist, umfasst.

Die JP H07-403879 A offenbart verstärkte Polyesterfasern, die zum Zweck einer Verbesserten Haftung von Polyesterfasern und verstärkten Kunststoffen u.a. mit Epoxyverbindungen behandelt werden.

Der vorliegenden Erfindung liegt daher die Aufgabe zugrunde, ein textiles Halbzeug mit einer klebrigen Oberfläche vorzuschlagen, welches über einen größeren Zeitraum lagerfähig ist und das trotz seiner Klebrigkeit möglichst keinen negativen Einfluss auf die Festigkeit der daraus hergestellten Faserverbundbauteile aufweist.

Erfindungsgemäß wird die Aufgabe durch die kennzeichnenden Merkmale des Anspruchs 1 gelöst. Vorteilhafte Ausgestaltungen finden sich in den abhängigen Ansprüchen.

Durch Teilvernetzung zumindest eines Bestandteils des Klebstoffes im Anschluss an den Auftrag des Klebstoffes auf das textile Halbzeug erfolgt eine Immobilisierung des Klebstoffes. Indem der Klebstoff auf der Oberfläche des textilen Halbzeugs immobilisiert wird, kann ein weiteres Einsinken und/oder Einziehen des Klebstoffes in das textile Halbzeug verhindert werden, so dass auch nach längerer Lagerzeit der Klebstoff nahezu vollständig auf der Oberfläche vorhanden ist.

Der teilvernetzte Bestandteil des Klebers ist dabei das Produkt einer Teilvernetzung zumindest eines Doppelbindungen enthaltenden Monomers, wobei die Teilvernetzung durch gezielte Energiezufuhr auf die Oberfläche des Halbzeuges ausgelöst wird, so dass die Teilvernetzung nach dem Aufbringen des Klebstoffs auf das Halbzeug erfolgen kann.

Als Doppelbindungen enthaltendes Monomer wird ein Partialester, hergestellt durch Umsetzung eines Epoxidharzes mit einer ungesättigten Carbonsäure, verwendet. Dieser weist den Vorteil auf, eine intramolekulare Verknüpfung des durch die Polymerisation der Doppelbindungen entstehenden Netzwerkes mit dem aus einer späteren Vernetzung vorhandener Epoxidgruppen resultierenden Netzwerk zu ermöglichen (sogenannte interpenetrierende Netzwerke).

Zur Herstellung des Partialesters werden bevorzugt Bisphenol-A-, Bisphenol-F-Epoxidharze und/oder besonders bevorzugt epoxidierte Novolake eingesetzt. Die ungesättigte Carbonsäure kann ausgewählt sein aus C1 bis C12 Carbonsäuren, wobei die Verwendung von Acryl- und Methacrylsäure besonders bevorzugt ist, weil diese einerseits in ausreichendem Maße als Standardchemikalie kostengünstig zur Verfügung stehen sowie gegenüber der Epoxidgruppe eine geeignete Reaktivität aufweisen.

Der Partialester wird vorteilhafterweise durch eine unvollständige Umsetzung eines Epoxidharzes mit Acrylsäure oder Methacrylsäure hergestellt, wobei die unvollständige Reaktion durch die Stöchiometrie der Ausgangsstoffe steuerbar ist. Diese Reaktion ist in der Offenlegungsschrift DE 10223313 A1 beschrieben, deren Inhalt hiermit vollständig mit in die Offenbarung dieser Patentanmeldung aufgenommen ist.

Der Klebstoff enthält vorzugsweise weiterhin zumindest die folgenden weiteren Bestandteile: ein Epoxidharz, eine Kautschukkomponente, und einen Initiator.

Eine bevorzugte Zusammensetzung des Klebstoffes enthält bezogen auf das Gewicht der Gesamtmischung etwa 25 - 40 % Kautschuk, 5 - 10 % Epoxidharz und 40 - 60 % Partialester. Darüber hinaus beinhaltet die Klebstoffformulierung einen geeigneten Initiator in einer üblicherweise verwendeten Konzentration von 0,2 bis 3 % (besonders bevorzugt 1 - 2 %). Weiterhin kann der Klebstoff übliche Zusatzstoffe wie Farbstoffe, Verarbeitungshilfsmittel oder Additive zur Verbesserung der Benetzung von Oberflächen enthalten.

Besonders bevorzugt ist es, wenn der Initiator ein durch UV-Licht aktivierbarer Fotoinitiator oder ein Peroxid ist, weil dadurch eine in ihrem Umfang kontrollierte chemische Teilvernetzung des Klebstoffes möglich ist.

Für das erfindungsgemäße textile Halbzeug kann Epoxidharz nach dem Stand der Technik verwendet werden, wobei es von Vorteil ist, wenn das Epoxidharz ein Bisphenol-A-Harz, ein Bisphenol-F-Harz, Tetraglycidylmethylendianilin (TGMDA), Triglycidyl-para-aminophenol (TGPAP) und/oder ein epoxidierter Novolak ist. Der Vorteil dieser Epoxidharze besteht darin, dass diese mit den anderen Komponenten des Klebstoffes kompatibel sind, hervorragende mechanische Eigenschaften haben, sowie eine gute Klebrigkeit sicherstellen.

Weiterhin ist für das erfindungsgemäße textile Halbzeug zumindest eine Kautschukkomponente, bei der es sich um einen Synthese- oder Naturkautschuk handeln kann, erforderlich. Insbesondere geeignet ist Amin- und/oder Carboxyterminierter Butadien-Nitrilkautschuk (Hycar CTBN bzw. ATBN) mit einem mittleren Molekulargewicht von 2000 bis 6000 g/mol vorzugsweise in Abmischung mit NBR mit einem Molekulargewicht von 20000 g/mol bis 2000000 g/mol besonders bevorzugt 50000 g/mol bis 1000000 g/mol, weil dieser eine optimale Klebrigkeit aufweist und eine gute Verträglichkeit mit Epoxidharzen aufweist. Durch vorherige Umsetzung der Kautschukkomponenten mit Epoxidharzen, die auch als Adduktierung bezeichnet wird, können die Produkteigenschaften zusätzlich optimiert werden. Weiterhin geeignet sind carboxy-funktionalisierte Butadienkautschuke mit einem Molekulargewicht von 2000 bis 10000 g/mol, welche z. B. durch Umsetzung der Homopolymerisate mit Maleinsäureanhydrid erhältlich sind.

Besonders von Vorteil ist es, wenn der zur Herstellung des erfindungsgemäßen Halbzeuges verwendete Klebstoff in Epoxidharze enthaltenden Reaktionsharzmischungen quellbar und/oder anlösbar ist, da dadurch eine besonders innige Vermischung des Klebstoffes mit der Harzmatrix erreicht wird. Dies ist für die resultierenden mechanischen Festigkeiten des daraus gefertigten Bauteils essentiell.

Als textile Grundlage zur Herstellung der erfindungsgemäßen textilen Halbzeuge werden vorteilhafterweise Gelege, Gewebe, Gewirke, Gestricke und/oder Vliese allein oder in Kombination verwendet. Diese Verstärkungsmaterialien können aus Glas-, Carbon-, Aramid-, Naturfasern, wie z. B. Flachs, Hanf, Sisal, oder Basaltfasern hergestellt sein. Es sind aber auch andere aus dem Stand der Technik bekannte textile Materialien und Konstruktionen möglich.

Die Aufbringung des Klebstoffes auf die textile Grundlage erfolgt bevorzugt durch Aufsprühen einer Lösung oder Schmelze des Klebstoffes, wobei eine Menge von 2 bis 50 g/m², besonders bevorzugt 4 bis 15 g/m² aufgetragen werden, um die optimale Haftklebrigkeit zu erzielen.

Die erfindungsgemäßen textilen Halbzeuge können bevorzugt zur Herstellung von faserverstärkten Kunststoffen verwendet werden, wobei das dabei verwendete Reaktionsharz bevorzugt ein Epoxidharz enthält oder ein Epoxidharz darstellt. Der besondere Vorteil des erfindungsgemäßen Klebstoffes besteht in der chemischen Reaktion der im Klebstoff enthaltenen Epoxigruppen mit den Epoxidgruppen des verwendeten Reaktionsharzes und den daraus resultierenden positiven Festigkeitseigenschaften des Faserverbundbauteils.

Die erfindungsgemäßen textilen Halbzeuge weisen bei Raumtemperatur über einen Zeitraum von mehr als 4 Monaten bis hin zu mehreren Jahren eine stabile Oberflächenklebrigkeit auf. Selbst bei Temperaturen von ca. 60°C bleibt die gute Klebrigkeit über einen Zeitraum von mehreren Wochen bis Monaten erhalten.

Darüber hinaus zeichnen sich die erfindungsgemäßen textilen Halbzeuge dadurch aus, dass textile Verstärkungslagen hervorragend in einer Bauteilform positioniert und bei Bedarf mehrfach repositioniert werden können und so die Herstellung komplexer dreidimensionaler Preformgeometrien ermöglichen. Die erfindungsgemäßen textilen Halbzeuge sind insbesondere zur Herstellung faserverstärkter Bauteile in Vakuuminfusions- und Harzinjektionsverfahren wie (Resin Infusion, Resin Transfer Moulding, etc.) geeignet.

Weiterhin zeichnen sich die erfindungsgemäßen textilen Halbzeuge dadurch aus, dass der verwendete Klebstoff die mechanischen Festigkeitswerte des faserverstärkten Bauteils nicht signifikant beeinträchtigt.

Die erzielten Eigenschaften ermöglichen den Einsatz der erfindungsgemäßen textilen Halbzeuge zur Herstellung von Leichtbaustrukturen im Automobilbereich, Luftfahrt, Boots- und Schiffbau, von Sportartikeln sowie Rotorblättern für Windkraftanlagen.

Anhand von zwei exemplarischen Ausführungsbeispielen und dreier Vergleichsbeispiele soll die Erfindung näher erläutert werden:

### Beispiel 1

Zusammensetzung des Klebstoffes:
- 270 g eines Umsetzungsproduktes von Hycar CTBN 1300 x 13 (Noveon) mit EPR 0164 (Bakelite AG)
- 80 g EPR 0164 (Bakelite AG)
- 200 g EPR 05322 (Bakelite AG)
- 439 g EPA 03582 (Bakelite AG)
- 15 g Genocoure MBF (Rahn AG)
- 15Cab-O-Sil TS 720

Zur Herstellung des erfindungsgemäßen textilen Halbzeuges wird der Klebstoff auf eine geeignete Temperatur vorgewärmt und auf das Textil aufgesprüht. Es ist ebenso möglich, den Klebstoff in Aceton oder Methylethylketon zu lösen und ohne vorherige Erwärmung auf das betreffende Textil aufzutragen. Durch Beschichtung eines unidirektionalen Geleges aus Glasfaser (E-Glas; 2400 tex) mit 3% Schussanteil in 90°-Richtung (E-Glas; 68 tex) mit 10+/-2 g/m² des o. g. Klebstoffes und Teilvernetzung durch UV-Bestrahlung wird dem Textil eine ausreichende und dauerhafte Klebrigkeit von länger als 4 Wochen verliehen, ohne dass hinsichtlich der mechanischen Eigenschaften merkliche Einbußen zu verzeichnen sind. Außerdem wird eine Temperaturbeständigkeit bei 60°C erreicht.

Vergleich mechanischer Kennwerte mit und ohne Klebstoff-Ausrüstung:
GFK-Probekörper: 8 Lagen UD mit ca. 1190 g/m² Flächengewicht
Probendicke 6,1 mm; FHG 61 Vol.%
Harzsystem Hexion RIM135/RIMH137
Proben mit Klebstoff gemäß Beispiel 1 einseitig mit ca. 10 g/m² beschichtet

Dreipunktbiegeprüfung nach DIN EN ISO 14125

| | |
|---|---|
| Prüfrichtrichtung: | 0° |
| Druckstempelradius R1: | 5mm |
| Auflageradius R2: | 5mm |
| Prüfgeschwindigkeit: | 2mm/min |

| Prüfergebnisse: | | E-Modul [GPa] | Rm [MPa] |
|---|---|---|---|
| | Prüfkörper | | |
| | Ohne Klebstoff | 48 | 940 |
| | mit Klebstoff | 46 | 920 |

### Beispiel 2

Zusammensetzung des Klebstoffes:
- 100 g Hycar CTBN 1300 x 13 (Noveon)
- 20 g Araldite GY 250 (Huntsman)
- 40 g EPR 03161 (Bakelite AG)
- 220 g EPA 04704 (Bakelite AG)
- 2 Gew.-% MEKP
- 0,15 Gew.-% Co-Katalysator

Zur Herstellung des erfindungsgemäßen textilen Halbzeuges wird der Klebstoff auf eine geeignete Temperatur vorgewärmt und auf das Textil aufgesprüht. Es ist ebenso möglich, den Klebstoff in Aceton oder Methylethylketon zu lösen und ohne vorherige Erwärmung auf das betreffende Textil aufzutragen. Durch Beschichtung eines unidirektionalen Geleges aus Glasfaser (E-Glas; 2400 tex) mit 3% Schussanteil in 90°-Richtung (E-Glas; 68 tex) mit 10+/-2 g/m² des o. g. Klebstoffes und Teilvernetzung durch durch thermische Aktivierung von etwa 30 min bei ca. 90°C wird dem Textil eine ausreichende und dauerhafte Klebrigkeit von länger als 4 Wochen verliehen, ohne dass hinsichtlich der mechanischen Eigenschaften merkliche Einbußen zu verzeichnen sind. Außerdem wird eine Temperaturbeständigkeit bei 60°C erreicht.

### Vergleichsbeispiel A

Zusammensetzung des Klebstoffes:
- 2 Gew.-% EPR 5311 (Bakelite AG)
- 86 Gew.-% EPR 5322 (Bakelite AG)
- 12 Gew.-% Hycar CTBN 1300 x 13 (Noveon)

Zur Herstellung des erfindungsgemäßen textilen Halbzeuges wird der Klebstoff auf eine geeignete Temperatur vorgewärmt und auf das Textil aufgesprüht. Es ist ebenso möglich, den Klebstoff in Aceton oder Methylethylketon zu lösen und ohne vorherige Erwärmung auf das betreffende Textil aufzutragen. Ein unidirektionales Geleges aus Glasfaser (E-Glas; 2400 tex) mit 3% Schussanteil in 90°-Richtung (E-Glas; 68 tex) wird mit 10+/-2 g/m² des o. g. Klebstoffes beschichtet. Das resultierende textile Halbzeug zeigt zwar eine hohe Anfangsklebrigkeit. Der Klebstoff sinkt aber in weniger als 5 Tagen in das Gelege ein. Außerdem wird keine Temperaturbeständigkeit bei 60°C erreicht.

### Vergleichsbeispiel B

Zusammensetzung des Klebstoffes:
- 2 Gew.-% BYK 410 (BYK)
- 65 Gew.-% EPR 5322 (Bakelite AG)
- 33 Gew.-% Hycar CTBN 1300 x 13 (Noveon)

Zur Herstellung des erfindungsgemäßen textilen Halbzeuges wird der Klebstoff auf eine geeignete Temperatur vorgewärmt und auf das Textil aufgesprüht. Es ist ebenso möglich, den Klebstoff in Aceton oder Methylethylketon zu lösen und ohne vorherige Erwärmung auf das betreffende Textil aufzutragen. Ein unidirektionales Geleges aus Glasfaser (E-Glas; 2400 tex) mit 3% Schussanteil in 90°-Richtung (E-Glas; 68 tex) wird mit 10+/-2 g/m² des o. g. Klebstoffes beschichtet. Das resultierende textile Halbzeug zeigt zwar eine hohe Anfangsklebrigkeit. Der Klebstoff sinkt aber in weniger als 5 Tagen in das Gelege ein. Ein Einsinken wird bereits nach einem Tag beobachtet. Außerdem wird keine Temperaturbeständigkeit bei 60°C erreicht.

### Vergleichsbeispiel C

Zusammensetzung des Klebstoffes:
- 0,5 Gew.-% EPR 5311 (Bakelite AG)
- 79,25 Gew.-% EPR 5322 (Bakelite AG)
- 16,25 Gew.-% Hycar CTBN 1300 x 13 (Noveon)
- 2 Gew.-% BYK 410 (BYK)
- 2 Gew.-% Aerosil A380 (Degussa)

Zur Herstellung des erfindungsgemäßen textilen Halbzeuges wird der Klebstoff auf eine geeignete Temperatur vorgewärmt und auf das Textil aufgesprüht. Es ist ebenso möglich, den Klebstoff in Aceton oder Methylethylketon zu lösen und ohne vorherige Erwärmung auf das betreffende Textil aufzutragen. Ein unidirektionales Geleges aus Glasfaser (E-Glas; 2400 tex) mit 3% Schussanteil in 90°-Richtung (E-Glas; 68 tex) wird mit 10+/-2 g/m² des o. g. Klebstoffes beschichtet. Das resultierende textile Halbzeug zeigt zwar eine hohe Anfangsklebrigkeit. Der Klebstoff sinkt aber in weniger als 14 Tagen in das Gelege ein. Außerdem wird keine Temperaturbeständigkeit bei 60°C erreicht.

## Patentansprüche

1. Textiles Halbzeug mit wenigstens einer mit einem Kleber versehenen Oberfläche, wobei zumindest ein Bestandteil des Klebers teilvernetzt ist und der teilvernetzte Bestandteil das Produkt einer Teilvernetzung zumindest eines Doppelbindungen enthaltenden Monomers ist, **dadurch gekennzeichnet, dass** das Doppelbindungen enthaltende Monomer ein Partialester, hergestellt durch Umsetzung eines Epoxidharzes mit einer ungesättigten Carbonsäure, ist.

2. Textiles Halbzeug nach Anspruch 1, **dadurch gekennzeichnet, dass** der Partialester das Produkt einer Umsetzung eines Epoxidharzes mit Acrylsäure oder Methacrylsäure im stöchiometrischen Unterschuss ist.

3. Textiles Halbzeug nach Anspruch 1 oder 2, **dadurch gekennzeichnet, dass** der Partialester ein epoxierter Novolak ist.

4. Textiles Halbzeug nach zumindest einem der vorhergehenden Ansprüche, **dadurch gekennzeichnet, dass** der Klebstoff weiterhin zumindest folgende weitere Bestandteile enthält: wenigstens ein Epoxidharz, wenigstens eine Kautschukkomponente und wenigstens einen Initiator.

5. Textiles Halbzeug nach zumindest einem der vorhergehenden Ansprüche, **dadurch gekennzeichnet, dass** der Initiator ein Fotoinitiator oder ein Peroxid ist.

6. Textiles Halbzeug nach wenigstens einem der vorhergehenden Ansprüche, **dadurch gekennzeichnet, dass** die Teilvernetzung des teilvernetzbaren Bestandteils des Klebstoffs auf der Oberfläche des textile Halbzeugs durch Bestrahlung des Halbzeugs mit UV-Licht erfolgt.

7. Textiles Halbzeug nach wenigstens einem der vorhergehenden Ansprüche, **dadurch gekennzeichnet, dass** das Epoxidharz ein Bisphenol-A-Harz, ein Bisphenol-F-Harz, Tetraglycidylmethylendianilin (TGMDA), Triglycidyl-para-aminophenol (TGPAP) und/oder ein epoxidierter Novolak ist.

8. Textiles Halbzeug nach wenigstens einem der vorhergehenden Ansprüche, **dadurch gekennzeichnet, dass** die Kautschukkomponente ein Synthese- oder ein Naturkautschuk ist.

9. Textiles Halbzeug nach wenigstens einem der vorhergehenden Ansprüche, **dadurch gekennzeichnet, dass** der Klebstoff in Epoxidharze enthaltenden Reaktionsharzmischungen quellbar und/oder anlösbar ist.

10. Textiles Halbzeug nach wenigstens einem der vorhergehenden Ansprüche, **dadurch gekennzeichnet, dass** das Halbzeug ein Gelege, eine Gewebe, ein Gestrick oder ein Vlies ist.

11. Textiles Halbzeug nach zumindest einem der vorhergehenden Ansprüche, **dadurch gekennzeichnet, dass** das Textil aus Glas-, Carbon-, Basalt-, Naturfasern wie Flachs, Hanf, Sisal und/oder Aramidfasern besteht.

12. Verwendung eines textilen Halbzeuges gemäß einem der Ansprüche 1 bis 11 zur Herstellung faserverstärkter Kunststoffe.

13. Verwendung eines textilen Halbzeugs nach Anspruch 12, **dadurch gekennzeichnet, dass** ein faserverstärkter Kunststoff hergestellt wird, der zumindest ein Epoxidharz aufweist.

14. Verwendung eines textilen Halbzeuges gemäß einem der Ansprüche 1 bis 11 zur Herstellung von Leichtbaustrukturen im Automobilbereich, in der Luftfahrt, im Boots- und Schiffbau, in Sportartikeln sowie in Rotorblättern für Windkraftanlagen.

## Claims

1. A semifinished textile product with at least one surface provided with an adhesive, wherein at least one constituent of the adhesive is partially crosslinked and the partially crosslinked constituent is the product of partial crosslinking of at least one monomer containing double bonds, chracterized in that the monomer containing double bonds is a partial ester prepared by the reaction of an epoxy resin with an unsaturated carboxylic acid.

2. The semifinished textile product according to claim 1, chracterized in that the partial ester is the product of conversion of an epoxy resin with acrylic acid or methacrylic acid in substoichiometric amount.

3. The semifinished textile product according to claim 1 or 2, chracterized in that the partial ester is an epoxidized novolak.

4. The semifinished textile product according to at least one of the preceding claims, chracterized in that the adhesive further contains at least the following further constituents: at least one epoxy resin, at least one rubber component and at least one initiator.

5. The semifinished textile product according to at least one of the preceding claims, chracterized in that the initiator is a photoinitiator or a peroxide.

6. The semifinished textile product according to at least one of the preceding claims, chracterized in that the partial crosslinking of the partially crosslinked constituents of the adhesive occurs on the surface of the semifinished textile product by irradiating the semifinished textile product with UV radiation.

7. The semifinished textile product according to at least one of the preceding claims, chracterized in that the epoxy resin is a bisphenol A resin, a bisphenol F resin, tetraglycidyl methylene dianiline (TGMDA), triglycidyl paraaminophenol (TGPAP) and/or an epoxidized novolak.

8. The semifinished textile product according to at least one of the preceding claims, chracterized in that the rubber component is a synthetic or a natural rubber.

9. The semifinished textile product according to at least one of the preceding claims, chracterized in that the adhesive is capable of being swelled and/or partially dissolved in reaction resin mixtures containing epoxy resins.

10. The semifinished textile product according to at least one of the preceding claims, chracterized in that the semifinished product is a non-crimp, a woven, a knitted or a nonwoven fabric.

11. The semifinished textile product according to at least one of the preceding claims, chracterized in that the textile consists of glass fibers, carbon fibers, basalt fibers, natural fibers, such as flax, hemp, sisal and/or aramid fibers.

12. Use of a semifinished textile product according to any one of claims 1 to 11 for the production of fiber-reinforced plastic materials.

13. Use of a semifinished textile product according to claim 12, chracterized in that a fiber-reinforced plastic is produced that includes at least an epoxy resin.

14. Use of a semifinished textile product according to any one of claims 1 to 11 for the production of light-weight structures in the automotive or aerospace industries, in boat and ship building, in sports articles, and in rotor blades for wind turbine generators.

## Revendications

1. Produit textile semi-fini avec au moins une surface pourvue d'un adhésif, avec du moins un composé de l'adhésif étant partiellement réticulé et le composé partiellement réticulé étant le produit d'une réticulation partielle d'au moins un monomère contenant des liaisons doubles, **caractérisé en ce que** le monomère contenant des liaisons doubles est un ester partiel produit par la réaction d'une résine époxy avec un acide carbonique insaturé.

2. Produit textile semi-fini selon la revendication 1, **caractérisé en ce que** l'ester partiel est le produit d'une réaction d'une résine époxy avec de l'acide acrylique ou methacrylique en quantité stoechiométriquement insuffisante.

3. Produit textile semi-fini selon la revendication 1 ou 2, **caractérisé en ce que** l'ester partiel est une novolaque époxydée.

4. Produit textile semi-fini selon du moins une des revendications précédentes, **caractérisé en ce que** l'adhesif contient en plus du moins les autres composés suivants: au moins une résine époxy, au moins une composante caoutchouc et au moins un initiateur.

5. Produit textile semi-fini selon du moins une des revendications précédentes, **caractérisé en ce que** l'initiateur est un photoinitiateur ou un peroxyde.

6. Produit textile semi-fini selon du moins une des revendications précédentes, **caractérisé en ce que** la réticulation partielle de la composante réticulable de l'adhésif sur la surface du produit textile semi-fini s'effectue par l'irradiation du produit semi-fini avec de la lumière ultraviolette.

7. Produit textile semi-fini selon au moins une des revendications précédentes, **caractérisé en ce que** la résine époxy est une résine bisphénol A, une résine bisphénol F, de la dianiline de tétraglycidylméthylène (TGMDA), du para-aminophénol de triglycidyle (TGPAP) et/ou une novolaque époxydée.

8. Produit textile semi-fini selon du moins une des revendications précédentes, **caractérisé en ce que** le composé caoutchouc est un caoutchouc synthétique ou naturel.

9. Produit textile semi-fini selon du moins une des revendications précédentes, **caractérisé en ce que** l'adhésif est gonflable et/ou partiellement soluble dans des mélanges réactifs de résines contenant des résines époxy.

10. Produit textile semi-fini selon du moins une des revendications précédentes, **caractérisé en ce que** le produit semi-fini est une texture, un textile tissé ou non-tissé ou un tricot.

11. Produit textile semi-fini selon du moins une des revendications précédentes, **caractérisé en ce que** le textile se compose de fibres de verre, de carbone, de basalte, de fibres naturelles comme le lin, le chanvre, le sisal et/ou de fibre d'aramide.

12. Utilisation d'un produit textile semi-fini selon une des revendications 1 à 11 pour la production de plastiques renforcés par des fibres.

13. Utilisation d'un produit textile semi-fini selon la revendication 12, **caractérisé en ce qu'**un plastique renforcé par des fibres est fabriqué qui comporte du moins une résine époxy.

14. Utilisation d'un produit textile semi-fini selon une des revendications 1 à 11 pour la fabrication de structures de construction légère dans le secteur automobile, en aéronautique, dans la construction navale, dans des articles de sport ainsi que dans des pales de rotor pour des éoliennes.
